# EUROPEAN PATENT APPLICATION

(11) **EP 4 768 850 A1**
(43) Date of publication of application: **01.07.2026**
(21) Application number: 25190673.1
(22) Date of filing: 21.07.2025
(51) Int. Cl.: G01C 11/12, G01C 15/00, G01C 25/00

(54) **DETERMINING THE CENTER OF A TARGET AND CALIBRATING A CAMERA DEVICE OF A TOTAL STATION USING THE CENTER OF THE TARGET**

(30) Priority: 31.12.2024 EP 24223899
(71) Applicant: Hilti Corporation, 9494 Schaan (LI)
(72) Inventor: Gogolla, Torsten, 9494 Schaan (LI); Winter, Andreas, 6800 Felkirch (AT)
(74) Representative: Hilti Aktiengesellschaft Corporate Intellectual Property

(57) **Abstract**

Method for calibrating a camera device of a total station using one or more targets, that are retro-reflective, and the total station, wherein for each of the targets, the following steps are performed: Capturing the target, determining the center of the target, moving the distance measuring beam to that center, taking first and second images of the target with an illumination light switched on respectively switched off, determining in the first image, in the second image and/or in a differential image between the first and second images, a blob and a blob centroid. One or more camera parameters of the camera device are estimated from the blob centroids and a model for the camera device.

## Description

The present invention relates to a method for determining the center of a retro-reflective target and to a method for calibrating a camera device of a total station using at least one retro-reflective target and the center of the target.

### Background of the invention

In surveying instruments such as total stations, the use of a camera device may provide improved user convenience and new functions. Particularly, a view such as an image or a video feed provided by the camera device and shown on a display of the total station may be used for assisting target selection, target tracking and/or for providing the operator with an overview of potential points of interest.

To calibrate a camera device of a total station, targets having a checkerboard pattern are used. The checkerboard pattern is the most commonly used calibration pattern for camera calibration. Checkerboard patterns consist of alternating white and black squares of equal size, and the corners of the squares that lie inside the pattern are used as control points and can be detected by using a corner detector algorithm.

The drawback of camera calibration known from prior art is that the calibration method cannot be performed automatically by the total station. The operator must provide the specific target with the checkerboard pattern and arrange that target in defined orientations. Furthermore, this calibration method does not work with unsharp or unfocussed images.

### Summary of the invention

Therefore, what is desired is to calibrate a camera device of a total station automatically by the total station without interaction of an operator. Furthermore, no additional equipment should be required for calibrating the camera device, except for equipment that is already available at the construction site. Additionally, the camera calibration should work with unsharp or unfocussed images.

These objectives are achieved by realizing the features of the independent claims. Features which further develop the invention in an advantageous manner are described in the dependent claims.

According to an aspect of the present invention, there is provided a method for determining the center of a target, that is retro-reflective, using a total station including a base, a support being rotatable with respect to the base about a first instrument axis, a measuring head being rotatable with respect to the support about a second instrument axis, a drive system configured to rotate the support about the first instrument axis and/or the measuring head about the second instrument axis, a first angle encoder configured to determine an azimuth angle in a first encoder plane with respect to a rotation of the support about the first instrument axis, a second angle encoder configured to determine a zenith angle in a second encoder plane with respect to a rotation of the measuring head about the second instrument axis, and a computer system configured to control the total station and having control, evaluation and/or data processing functionality, wherein the measuring head includes a distance measuring device configured to emit a distance measuring beam defining a third instrument axis, an illumination light source configured to emit illumination light and a camera device having a camera axis, an image sensor and an optical lens, the method being performed by the computer system and comprising:
▪ Instructing the total station to capture the target or asking to arrange the distance measuring beam on the target,
▪ Instructing the total station to take a first image of the target with the distance measuring beam switched on and a second image of the target with the distance measuring beam switched off,
▪ Determining a first differential image between the first and second images related to the distance measuring beam and determining a first blob centroid in the first differential image,
▪ Instructing the total station to take a first image of the target with the illumination light switched on and a second image of the target with the illumination light switched off,
▪ Determining a second differential image between the first and second images related to the illumination light and determining a second blob centroid in the second differential image,
▪ Determining a first angular difference and a second angular difference using the first blob centroid and second blob centroid, and
▪ Determining the center of the target using at least the first angular difference and second angular difference.

The method according to the present invention allows us to determine the center of a target, that is retro-reflective, by means of at least one camera device of the total station, the distance measuring beam and the illumination light. The center of the target can be used to calibrate a camera device of the total station or to calibrate the instrument axes of the total station.

To determine the center of the target, it is necessary that the target is captured by the total station. Any method to search for a target by means of the total station can be used or the operator is asked to arrange the distance measuring beam anywhere on the target.

The center of the target is determined from the first differential image using the distance measuring beam (switched on and switched off) and the second differential image using the illumination light (switched on and switched off). In the first differential image, the first blob centroid is determined from the first blob, and in the second differential image, the second blob centroid is determined from the second blob.

The blob is a region in the first image taken with distance measuring beam or illumination light switched on, in the second image taken with distance measuring beam or illumination light switched off and/or in the differential image between the first and second images that differs in properties, such as brightness and/or color, compared to surrounding regions, and the blob centroid is a weighted average of the blob that can be weighted with the area of the blob as the weighting factor, wherein the weighting factor may be equal over the area of the blob, or it may be different.

Another embodiment of the invention relates to a method for determining the center of a target. The center of the target is determined by:
▪ Instructing the total station to determine a first center angle using the first angle encoder and a second center angle using the second angle encoder, and
▪ The center of the target is determined by using the first center angle and first angular difference and by using the second center angle and second angular difference.

Another embodiment of the invention relates to a method for determining the center of a target. The center of the target is determined by instructing the drive system to move the distance measuring beam by the first angular difference and second angular difference.

According to a further aspect of the present invention, there is provided a computer program comprising instructions, which, when executed by a computer system, cause the computer system to carry out the method for determining the center of a target according to the present invention.

The computer program may be stored on the computer system or on a computer-readable medium communicatively connected to the computer system. The term "computer system" includes, but is not limited to, processing units, microprocessors, controlling units, microcontrollers, and various other units capable of processing and/or controlling, and the term "computer-readable medium" includes, but is not limited to, portable or non-portable storage devices, optical storage devices, and various other mediums capable of storing, containing, or carrying instruction(s) and/or data.

According to a further aspect of the present invention, there is provided an apparatus comprising means for carrying out the method for determining the center of a target according to the present invention.

According to a further aspect of the present invention, there is provided a method for calibrating a camera device of a total station using at least one target of F, F ≥ 1 targets, that are retro-reflective, and the total station including a base, a support being rotatable with respect to the base about a first instrument axis, a measuring head being rotatable with respect to the support about a second instrument axis, a drive system configured to rotate the support about the first instrument axis and/or the measuring head about the second instrument axis, a first angle encoder configured to determine an azimuth angle in a first encoder plane with respect to a rotation of the support about the first instrument axis, a second angle encoder configured to determine a zenith angle in a second encoder plane with respect to a rotation of the measuring head about the second instrument axis, and a computer system configured to control the total station and having control, evaluation and/or data processing functionality, wherein the measuring head includes a distance measuring device configured to emit a distance measuring beam defining a third instrument axis, an illumination light source configured to emit illumination light, and the camera device having a camera axis, an image sensor, and an optical lens, the method being performed by the computer system and comprising:
▪ Performing a j-th loop with j = 1 ... J, J ≥ 1 and F ≥ J, the j-th loop comprising:
   - Instructing the total station to capture a j-th target of the F, F ≥ 1 targets,
   - Determining a j-th center of the j-th target using the method for determining the center of a target according to the present invention,
   - Instructing the drive system to move the distance measuring beam to the j-th center of the j-th target,
   - Instructing the total station to take a j-th first image of the j-th target with the illumination light switched on and/or a j-th second image of the j-th target with the illumination light switched off,
   - Determining in the j-th first image, in the j-th second image, and/or in a j-th differential image between the j-th first image and j-th second image, a j-th blob and a j-th blob centroid for the j-th blob,
▪ Estimating at least one camera parameter of the camera device using at least the j-th centroids with j = 1 ... J, and a model for the camera device.

The method according to the present invention allows to calibrate a camera device, wherein "to calibrate a camera device" means to estimate at least one camera parameter for the camera device. The camera parameters that can be estimated include extrinsic parameters, intrinsic parameters, and lens distortion parameters. The extrinsic parameters represent a rigid transformation from a 3D coordinate frame of the total station to a 3D coordinate frame of the camera device, and the intrinsic parameters represent a projective transformation from the camera's 3D coordinate frame into the camera's image plane. The extrinsic parameters can include a translation vector and a rotation matrix (including angle errors of the camera axes), and the intrinsic parameters can include the focal length, the image distance, a principal point, and a skew coefficient.

According to the method for calibrating a camera device, the total station is instructed to capture at least one of the retro-reflective targets. The target is captured by the total station, when the target is arranged anywhere in the camera's field of view; it is not necessary that the center of the target is arranged in the center of the camera device.

To estimate camera parameters for the camera device using the method according to the present invention, one or more correspondences of a point in the 3D coordinate frame of the total station and an image point in the camera's image plane are determined. The point that is used is the center of the target. When the target is captured by the total station, the center of the target is determined in the 3D coordinate frame of the total station.

When the center of the target is determined, the total station is instructed to arrange the distance measuring beam at the center of the target using the drive system. In that orientation of the distance measuring beam, where the distance measuring beam is directed towards the center of the target, the total station can be instructed to determine a distance to the center of the target, so-called "center distance", using the distance measuring device, and/or to determine an azimuth center angle in the first encoder plane using the first angle encoder and a zenith center angle in the second encoder plane using the second angle encoder. The position of the center of the target is also called "center position" and it is a point in the 3D coordinate frame of the total station, but the center position is not necessary to be determined in all cases. The center position can be determined by using the center distance, the azimuth center angle and the zenith center angle.

Not more than two camera parameters can be determined from a single correspondence of a point in the 3D coordinate frame of the total station and an image point in the camera's image plane. Each correspondence allows to estimate two camera parameters using a model for the camera device. Two or more correspondences can be determined by using more than one view of the camera device defined by an azimuth view angle of the camera axis in the first encoder plane and a zenith view angle of the camera axis in the second encoder plane and/or by using more than one retro-reflective target.

To determine the image point in the camera's image plane, the total station is instructed to take a first image of the target with the illumination light switched on and/or a second image of the target with the illumination light switched off. The computer system can determine a differential image between the first image and second image.

The idea of the present invention is to identify the center of the target in the first image, in the second image and/or in the differential image between the first and second images. We need an image that allows us to identify a blob and determine for the blob a blob centroid, which corresponds to the center of the target in the camera's image plane.

The blob is a region in the first image, in the second image and/or the in differential image that differs in properties, such as brightness and/or color, compared to surrounding regions, and the blob centroid is a weighted average of the blob that can be weighted with the area of the blob as the weighting factor, wherein the weighting factor may be equal over the area of the blob, or it may be different.

Dependent on the type of retro-reflective target (prism/corner cube, cat-eye or foil) and/or the lighting conditions, the first image, the second image and/or the differential image is used for blob detection. For instance, the differential image can be the first option for blob detection. However, in very bright lighting conditions, the first image and second image may be too similar to identify a blob in the differential image. In that case, either the first image of the target with the illumination light switched on or the second image of the target with the illumination light switched off can be used for blob detection.

The model of the camera device describes a mathematical relationship between the coordinates of a point in the 3D coordinate frame of the total station and its projection onto the camera's image plane. The model can consist of a transformation model, a projection model, and a lens distortion model. The transformation model can include the translation and the rotation of the camera device in the coordinate frame of the total station. The rotation includes rotation by camera axes angle errors (pitch, yaw, roll) and rotation about the instrument axes of the total station (first instrument axis, second instrument axis). With the transformation model, a 3D point is transformed into the coordinate frame of the camera device. And with the projection model, the transformed point is projected onto the image sensor (camera chip). By far the most common projection model is the pinhole model, which makes the fundamental assumption that rays of light enter the camera device through an infinitely small aperture (pinhole). The pinhole model can be used as a first order approximation; it does not include geometric distortions or blurring of unfocussed objects caused by lenses and finite sized apertures. A complex model cannot be solved analytically; it is solved numerically. The method for calibrating a camera device according to the present invention can be used to calibrate those camera parameters that are considered in the model. Furthermore, an axes model of the total station can be combined with the model. With the axes model, the 3D point in the 3D coordinate frame of the total station is determined by using the center distance, the azimuth center angle and the zenith center angle.

For an off-axis camera device, the camera axis and the targeting axis of the total station are arranged in a parallel manner with a non-zero offset, so-called "parallax-offset", and the position of the center of the target in the camera's image depends on the distance between the total station and the target. To determine the two camera angle errors (pitch, yaw) or the principal point, it is necessary to use at least one retro-reflective target arranged at a distance to the total station which should be bigger than e.g. 10 m. The camera angle errors (pitch, yaw) or the principal point can be calculated by applying at least the measured center distance to the target and the corresponding point (blob centroid) in the camera image on the model. If the laser beam spot is not located in the center of the target while taking the first image and/or second image of the target, the 3D point of the center of the target in the instrument coordinate frame must be determined by using the center distance, the azimuth center angle and the zenith center angle. The camera angle errors (pitch, yaw) or the principal point can be calculated by applying the point in the 3D coordinate frame of the total station, the corresponding point in the camera image, and the corresponding camera view angles, which differ in this case from the center angles, on the model. The view of the camera device is defined by different azimuth view angles of the camera axis in the first encoder plane and/or different zenith view angles of the camera axis in the second encoder plane.

Not all camera parameters can be calibrated from only one correspondence of a point in the 3D coordinate frame of the total station and an image point in the camera's image plane. To calibrate e.g. the camera angle error roll or lens distortion parameters, it is necessary to use at least two views of the camera device defined by different azimuth view angles of the camera axis in the first encoder plane and/or different zenith view angles of the camera axis in the second encoder plane. For each of the two views, a correspondence between a point in the 3D coordinate frame of the total station and an image point in the camera's image plane is determined. The camera angle error roll or the lens distortion parameters can be calculated by applying the measured point in the 3D coordinate frame, the corresponding image points according to the at least two views, and the first and second view angles corresponding to the camera views, on the model. With one 3D point and N views, 2N camera parameters can be estimated. Since lens distortion only has an effect outside of the center of an image, the at least two views of the camera device should be selected such that the center of the target is arranged outside of the center of the image and ideally near the edges of the images.

To determine for an off-axis camera device the parallax-offset, it is necessary to use at least two retro-reflective targets arranged in different distances to the total station. For each of the two retro-reflective targets, a correspondence between a point in the 3D coordinate frame of the total station and an image point in the camera's image plane is determined. The parallax-offset and e.g. the principal point can be calculated by applying at least the measured two center distances to the two targets and the corresponding two image points in the images on the model of the camera device. If the laser beam spot is not located in the center of the two targets while taking the images of the targets, the 3D points of the center of the targets in the instrument coordinate frame must be calculated by using the center distance and the azimuth and zenith center angles of each target. The parallax-offset and e.g. the principal point can be calculated by applying the points in the 3D coordinate frame of the total station, the corresponding points in the camera image, and the corresponding azimuth and zenith view angles, which differ from the azimuth and zenith center angles, on the model.

If only one or two camera parameters should be estimated for an on-axis camera device, where the off-set between the camera axis and the targeting axis is zero and the position of the center of the target is independent from the distance between the total station and the target and if the laser beam spot is located in the center of the target while taking the first image (illumination on) and/or the second image (illumination off) of the target with the camera device, it is not necessary to determine the center distance, the azimuth center angle and the zenith center angle. The center distance and the azimuth and zenith center angles must be determined, if the laser beam spot is not located in the center of the target while taking the first image and/or second image of the target, which is the case when more than one retro-reflective target and/or more than one view is used to calibrate the camera device. The camera parameters can be calculated by at least applying the azimuth and zenith center angles, the blob centroid, and the azimuth and zenith view angles, which differ in this case from the azimuth and zenith center angles, on the model.

Another embodiment of the invention relates to the use of a center distance and center angles. The total station is instructed to determine a center distance to the center of the target using the distance measuring device and/or to determine an azimuth center angle to the center of the target using the first angle encoder and a zenith center angle to the center of the target using the second angle encoder. The center distance and the azimuth and zenith center angles to the center of a target can be used to determine the position of the center of the target in the 3D coordinate frame of the total station.

If the camera device is an off-axis camera device, for each target that is used for calibrating the camera device, the center distance to the center of the target must be determined. If that target is observed by the camera device in different views, the corresponding azimuth center angle in the first encoder plane and zenith center angle in the second encoder plane must also be determined. The position of the center of the target is called "center position" and can be determined from the center distance, the azimuth center angle and the zenith center angle.

Another embodiment of the invention relates to a method for calibrating a camera device using at least two different views of the camera device. For at least one target, that is captured, the camera device is set to at least two views defined by different azimuth view angles of the camera axis in the first encoder plane and/or different zenith view angles of the camera axis in the second encoder plane, and the first and second angle encoders are instructed to determine the azimuth view angles (first angle encoder) respectively the zenith view angles (second angle encoder) for the at least two views, wherein:
▪ For a first view of the at least two views:
   - Instructing the total station to take a first image of the target with the illumination light switched on and/or a second image of the target with the illumination light switched off,
   - Determining in the first image, in the second image and/or in a first differential image between the first and second images a first blob and a first blob centroid for the first blob,
▪ For a second view of the at least two views:
   - Instructing the total station to take a first image of the target with the illumination light switched on and/or a second image of the target with the illumination light switched off,
   - Determining in the first image, in the second image and/or in a second differential image between the first and second images a second blob and a second blob centroid for the second blob, and
▪ Estimating at least one camera parameter using at least the azimuth and zenith view angles of the first view and the first blob centroid, the azimuth and zenith view angles of the second view and the second blob centroid, and the model for the camera device.

For at least one view of the camera device, the center of the target is determined, and the total station is instructed to arrange the distance measuring beam at the center of the target. When the distance measuring beam is arranged at the center of the target, the total station is instructed to determine a center distance to the center of the target using the distance measuring device and/or to determine an azimuth center angle to the center of the target using the first angle encoder and a zenith center angle to the center of the target using the second angle encoder.

For an off-axis camera device, the center distance and the azimuth and zenith center angles to the center of the target must be determined when the camera device is set to at least two different views. It is not mandatory to determine the full 3D center position of the target; determination of the center position can be integrated into the model of the camera device. For an on-axis camera device, the azimuth and zenith center angles to the center of the target must be determined and the center distance is optional, when the camera device is set to different views.

Another embodiment of the invention relates to a method for calibrating a camera device using at least two retro-reflective targets. At least two targets of the F targets are captured by the total station one after the other, wherein:
▪ For a first target of the at least two targets:
   - Determining a first center of the first target,
   - Instructing the total station to arrange the distance measuring beam at the first center of the first target,
   - Instructing the total station to determine at least a first center distance to the first center using the distance measuring device,
   - Instructing the total station to take a first image of the first target with the illumination light switched on and/or a second image of the first target with the illumination light switched off,
   - Determining in the first image, in the second image and/or in a first differential image between the first and second images a first blob and a first blob centroid for the first blob,
▪ For a second target of the at least two targets:
   - Determining a second center of the second target,
   - Instructing the total station to arrange the distance measuring beam at the second center of the second target,
   - Instructing the total station to determine at least a second center distance to the second center using the distance measuring device,
   - Instructing the total station to take a first image of the second target with the illumination light switched on and/or a second image of the second target with the illumination light switched off,
   - Determining in the first image, in the second image and/or in a second differential image between the first and second images a second blob and a second blob centroid for the second blob, and
▪ Estimating at least one camera parameter using at least the first center distance and the first blob centroid, the second center distance and the second blob centroid, and the model for the camera device.

Using at least two targets allows to estimate the parallax offset for a camera device that is an off-axis camera device, where the parallax offset is defined between the camera axis and the targeting axis arranged in a parallel manner. If two or more targets are used to determine correspondences between a point in the 3D coordinate frame of the total station and an image point in the camera's image plane and if the laser beam spot is not in the center of the targets while taking the first image and/or second image, the full 3D position of the center of the target must be determined using the center distance and the azimuth and zenith center angles. If the laser beam spot is in the center of the targets while taking the first image and/or second image, the azimuth and zenith center angles are optional, but the center distance is mandatory in case of an off-axis camera device.

According to a further aspect of the present invention, there is provided a computer program comprising instructions, which, when executed by a computer system, cause the computer system to carry out the method for calibrating a camera device according to the present invention.

The computer program may be stored on the computer system or on a computer-readable medium communicatively connected to the computer system. The term "computer system" includes, but is not limited to, processing units, microprocessors, controlling units, microcontrollers, and various other units capable of processing and/or controlling, and the term "computer-readable medium" includes, but is not limited to, portable or non-portable storage devices, optical storage devices, and various other mediums capable of storing, containing, or carrying instruction(s) and/or data.

According to a further aspect of the present invention, there is provided an apparatus comprising means for carrying out the method for calibrating a camera device according to the present invention.

### Brief Description of the drawings

The aspects of the invention are described or explained in more detail below, purely by way of example, with reference to working examples shown schematically in the drawing. Identical elements are labelled with the same reference numerals in the figures. The described embodiments are generally not shown true in scale, and they are also not to be interpreted as limiting the invention. Specifically,
- FIG. 1: shows an operator using a total station deployed at a worksite, the total station comprising a measuring unit mounted on a tripod and a remote controller connected via a communication link to the measuring unit,
- FIGS. 2A, B: show an exemplary version of the measuring unit used in the total station of FIG. 1 (FIG. 2A) and a block diagram of the main components of the total station (FIG. 2B),
- FIGS. 3A, B: show the optical components of the measuring unit used in the total station of FIG. 1 in an exemplary version,
- FIG. 4: shows schematically the 3D coordinate frame of the total station, the 3D coordinate frame of a camera device to be calibrated, and the 2D image plane of the camera device,
- FIG. 5: shows a method for determining the center of a target according to the present invention in a flow chart,
- FIGS. 6A-D: show schematically how the center of the target is determined by a first differential image and second differential image,
- FIG. 7: shows a first method for calibrating a camera device according to the present invention in a flow chart,
- FIGS. 8A-D: show a first image taken with an illumination light switched on (FIG. 8A), a second image taken with the illumination light switched off (FIG. 8B), a differ- ential image between the first and second images (FIG. 8C), and a blob centroid determined in the differential image (FIG. 8D),
- FIG. 9: shows a second method for calibrating a camera device according to the present invention using two or more views of the camera device in a flow chart, and
- FIGS. 10A, B: show schematically the camera device arranged in a first view (FIG. 10A) and in a second view (FIG. 10B).

### Detailed Description

Reference will now be made in detail to the present preferred embodiment, an example of which is illustrated in the accompanying drawings. It is to be understood that the technology disclosed herein is not limited in its application to the details of construction and the arrangement of components set forth in the following description or illustrated in the drawings. The technology disclosed herein is capable of other embodiments and of being practiced or of being carried out in various ways.

Also, it is to be understood that the phraseology and terminology used herein is for the purpose of description and should not be regarded as limiting. All definitions, as defined and used herein, should be understood to control over dictionary definitions, definitions in documents incorporated by reference, and/or ordinary meanings of the defined terms.

The use of "including, or "comprising, or "having" and variations thereof herein is meant to encompass the items listed thereafter and equivalents thereof as well as additional items. Unless limited otherwise, the terms "connected", "coupled", and "mounted", and variations thereof herein are used broadly and encompass direct and indirect connections, couplings, and mountings. In addition, the terms "connected" and "coupled", and variations thereof are not restricted to physical or mechanical connections or couplings.

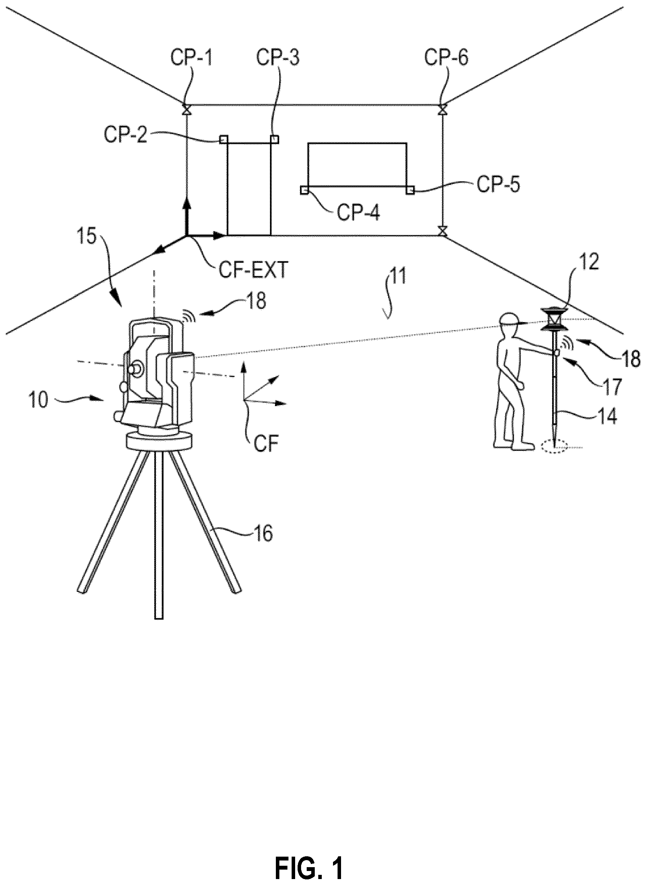

**FIG. 1** shows an operator using a total station **10** deployed at a worksite **11.** A total station is a surveying instrument that combines an electronic theodolite and an electronic distance meter to provide accurate measurements of both horizontal (azimuth) and vertical (zenith) angles as well as distances; it is commonly used in construction, engineering, and surveying projects to collect data for creating detailed maps, plans, and 3D models. There are different types of total stations, and they come with different features, such as manual total stations, which are operated manually by an operator, and robotic total stations, which are able to move the instrument with just one button press.

The worksite 11 may be a construction site, inside or outside, or a surveying site, amongst others. In addition to the total station 10, a target **12,** that is retro-reflective and remote from the total station 10, is deployed at the worksite 11 and mounted on top of a pole **14.** A retro-reflective target is a target that reflects radiation, such as laser light, back to its source with only small scattering. Retro-reflective targets can be formed as retro-reflective prisms (corner cubes), retro-reflective cat-eyes and/or retro-reflective foils, wherein any kind of retro-reflective target can be used. Examples of retro-reflective targets offered by the applicant are known as POA 20 (360° prism array), POA 103 (single prism), POA 25 (360° cat-eye array), POA 26 (flat cat-eye) and POA 101 (yellow foil).

The total station 10 is formed as a robotic total station and comprises a measuring unit **15** that is mounted on a mounting support structure in form of a tripod **16.** The total station 10 also comprises a removable control panel in the form of a remote controller **17** that can be used for remote control the measuring unit 15 via a wireless connection **18.**

Before the operator can use the total station 10 for layouting, measuring and/or other tasks, the total station 10 must be stationed via a stationing process to the worksite 11. From prior art, different stationing processes are known, such as free-stationing process, model-based stationing process, automatic stationing process, or any other stationing process.

The basic concept of free-stationing processes is that at an initial phase, a number of control points, here control points **CP-1, CP-2, CP-3, CP-4, CP-5, CP-6,** are positioned at scattered locations at worksite 11. The control points can be formed as retro-reflective prisms, retro-reflective cat-eyes, retro-reflective foils, and/or other forms of retro-reflective targets for returning the laser beam to the total station 10. The exact location of the control points is determined and logged in terms of coordinates on a specified coordinate frame, here coordinate frame **CF-EXT** of the worksite 11. The control points CP-1 to CP-6 can also be used as retro-reflective targets for calibrating a camera device.

To determine the pose (position and orientation) of the total station 10 in the coordinate frame CF-EXT of the worksite 11, the total station 10 sights a number of the control points and takes measurement samples of distance and angle data in its coordinate frame CF.

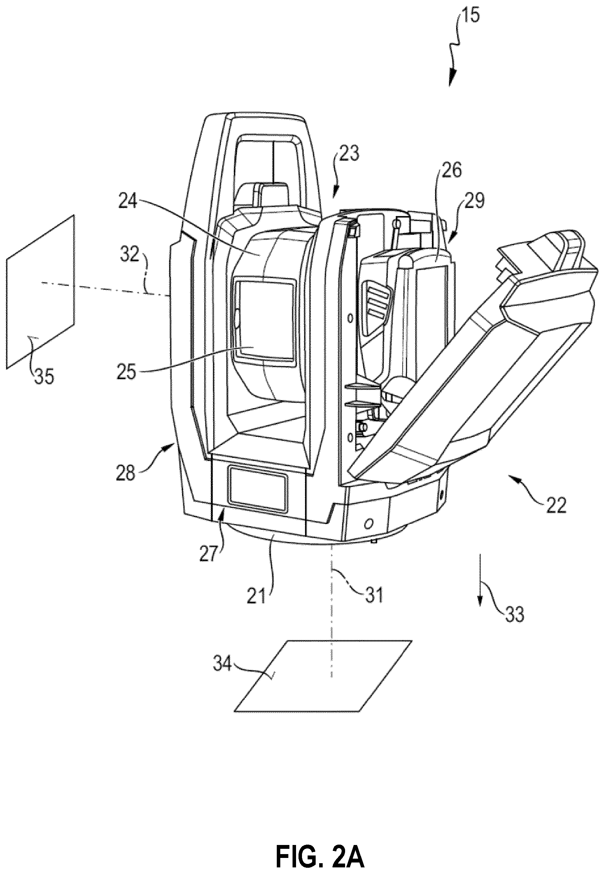

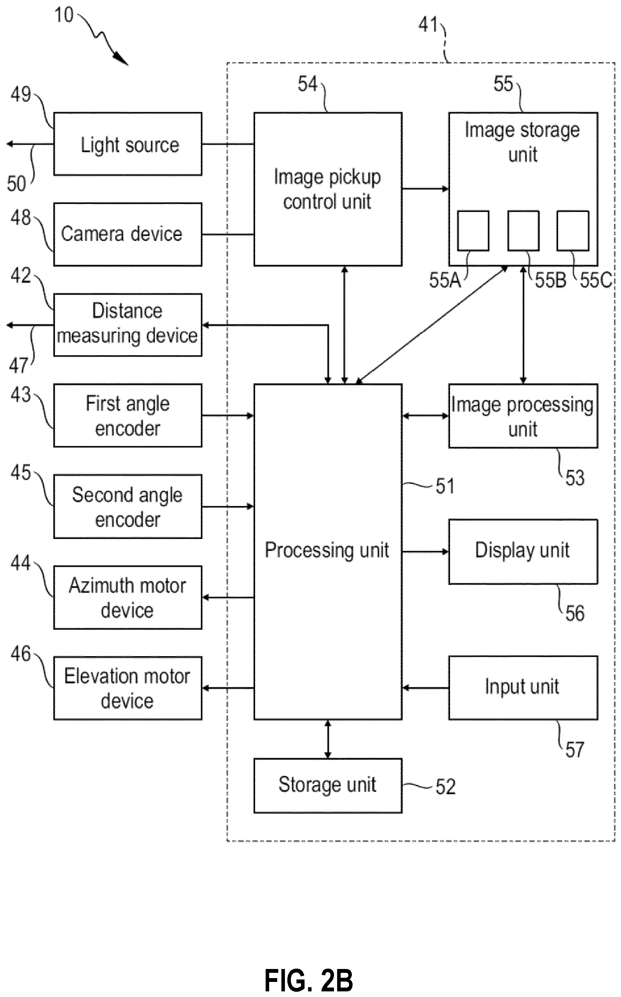

**FIGS. 2A****, B** show an exemplary version of the measuring unit 15 used in the total station 10 of FIG. 1 in a perspective view (FIG. 2A) and a block diagram of the main components of the total station 10 (FIG. 2B).

The total station 10 is designed as robotic total station and the measuring unit 15 comprises a base **21,** a support **22,** and a measuring head **23.** The measuring head 23 is enclosed by a housing **24,** which includes an exit window **25.** In the housing 24, a distance measuring device, that can emit a distance measuring beam, and a tracking device, that can emit tracking light, are arranged. The distance measuring beam and the tracking light are emitted through the exit window 25 to leave the housing 24.

In the exemplary version of FIG. 2A, support 22 is U-formed and includes a bottom portion **27,** a first side portion **28,** and a second side portion **29;** instead of the U-formed support, an L-formed support or any other formed support can be used. A battery pack 26 that is configured for powering the total station 10 is arranged in the second side portion 29. Alternatively, the battery pack 26 may be arranged in the first side portion 28 or in the bottom portion 27.

The support 22 can rotate completely around its circumference at a full 360° angle or at an angle smaller than the full 360° angle with respect to base 21 about a first instrument axis **31,** also called vertical axis. The measuring head 23 is pivotably mounted to the support 22 about a second instrument axis **32,** also called "horizontal tilting axis", and is arranged between the first side portion 28 and the second side portion 29 of the support. The first instrument axis 31 can be aligned parallel to a local direction of gravity **33,** and the second instrument axis 32 can be aligned perpendicular to the local direction of gravity 33, or the orientation of the first instrument axis 31 and of the second instrument axis 32 can be determined with respect to the local direction of gravity 33 or a horizontal plane being perpendicular to the local direction of gravity 33.

An azimuth motor device and a first angle encoder may be located in the bottom portion 27 of the support 22 and allow to rotate the measuring unit 15 about the first instrument axis 31 and to determine the direction of the distance measuring beam in a first encoder plane **34** essentially perpendicular to the first instrument axis 31. An elevation motor device and a second angle encoder may be located in the first side portion 28 of the support 22 and allow the measuring head 23 to pivot about the second instrument axis 32 and to determine the direction of the distance measuring beam in a second encoder plane **35** essentially perpendicular to the second instrument axis 32.

FIG. 2B shows a block diagram of the main components of the total station 10. The total station 10 includes a control device **41,** a distance measuring device **42,** a first angle encoder **43,** an azimuth motor device **44,** a second angle encoder **45,** and an elevation motor device **46.** The main components 41, 42, 43, 44, 45, and 46 are mandatory for a robotic total station, whereas a manual total station does not include the azimuth motor device 44 and the elevation motor device 46. The azimuth motor device 44 and the elevation motor device 46 are summarized as drive system of the measuring unit 15.

The distance measuring device 42 may include a laser transmitter, a laser driver circuit, a photosensor, and a laser receiver interface circuit. The laser driver circuit provides current for the laser transmitter, which emits a distance measuring beam **47.** The photosensor receives at least a part of the distance measuring beam 47 reflected at a target or a surface of the worksite, and the current signal that is outputted by the photosensor is directed to the laser receiver interface circuit. After appropriate amplification, demodulation and processing, distance data are sent via an input/output interface circuit to the control device 41.

The first angle encoder 43 provides signals to the control device 41, so that it knows exactly in which azimuth angle the distance measuring beam 47 is arranged in the first encoder plane 34, and the second angle encoder 45 provides signals to the control device 41, so that it knows exactly in which zenith angle the distance measuring beam 47 is arranged in the second encoder plane 35.

Angle encoders that provide the required accuracies for the total station 10 are magnetic encoders or optical encoders. Optical encoders use a transmissive scale disc made out of glass or plastic with an LED illumination on one side of the scale and an image or line sensor on the other side of the scale; the scale has a code to provide absolute readings on any angle. US 7,589,313 B2 describes a possible encoder technology that can be used for the first and second angle encoders 43, 45.

The azimuth motor device 44 may include an azimuth motor, which is the motive force to rotate the support 22 of the measuring unit 15 about the first instrument axis 31, and an azimuth motor driver circuit, which will provide the proper current and voltage to drive the azimuth motor. The elevation motor device 46 may include an elevation motor, which is the motive force to pivot the measuring head 23 about the second instrument axis 32, and an elevation motor driver circuit, which will provide the proper current and voltage to drive the elevation motor.

The total station 10 further includes a camera device **48** and a light source **49** that emits illumination light **50.** Depending on the application of the camera device 48, it may be called "tracking camera" configured for tracking retro-reflective targets, "aiming camera" configured for aiming a point of interest, or "finding camera" configured for searching/finding of retro-reflective targets. In order to work with all types of retro-reflective targets in all ambient lighting conditions, even in darkness or sunlight, the light source 49 can be used to produce the necessary illumination for the camera device 48. Camera device 48 can give information about a center of a target and this information can be used to steer the drive system 44, 46 of the total station 10 to direct the distance measuring beam 47 at a center of the retro-reflective target and to measure the 3D coordinates of the center of the target.

The control device 41 primarily comprises a processing unit **51,** a storage unit **52,** an image processing unit **53,** an image pickup control unit **54,** an image storage unit **55,** a display unit **56,** and an input unit **57.** Processing unit 51, image processing unit 53, and image pickup control unit 54 define a computer system having control, evaluation and/or data processing functionality for the total station 10.

In storage unit 52, there may be a program storage area for different types of computer programs and a data storage area for storing data such as the results of the distance and angle measurements. In the program storage area, various types of computer programs may be stored. These computer programs can include a calculating program for calculating coordinates or positions from distance and angle measurements for compensating camera and/or axes errors, image processing programs for performing image processing, a sequence program for selecting a point of interest in an image, for executing the distance measurement on the selected point of interest, a tracking program for tracking a retro-reflective target, a search program for searching a retro-reflective target when the target is missed out of sight, and other computer programs, such as a program for calibrating a camera device.

The image storage unit 55 may include a first image storage unit **55A,** a second image storage unit **55B,** and a third image storage unit **55C.** An image when the light source 49 is turned on and an image when the light source 49 is turned off may be acquired by the camera device 48 and by turning-on and turning-off operation of an electronic shutter in synchronization with the flashing of the light source 49. The image data when the illumination light 50 is turned on can be stored in the first image storage unit 55A, and the image data when the illumination light 50 is turned off can be stored in the second image storage unit 55B. The image processing unit 53 subtracts the image data when the illumination light 50 is turned off as stored in the second image storage unit 55B from the image data when the illumination light 50 is turned on as stored in the first image storage unit 55A and acquires only the target image. The image data of the target image thus acquired is stored on the third image storage unit 55C.

The control device 41 comprises a display unit 56 for showing images captured by the camera device 48. The display unit 56 may be an integral part of the measuring unit 15, but more preferably, the display unit 56 is included in the remote controller 17 that can be used for remote control of the total station 10. It is even conceivable that the total station 10 is fully remote controlled, wherein display unit 56 may be in the form of a computer screen far away, and wherein information to and from the total station 10 are transferred over a wireless network. Display unit 56 may include a screen, a touch screen, etc.

The control device 41 comprises the input unit 57 that may be an integral part of the measuring unit 15, but more preferably, the input unit 57 is included in the remote controller 17 that can be used for remote control of the total station 10. The input unit 57 may include various input elements, such as a mouse, a keyboard, a touchscreen, etc.

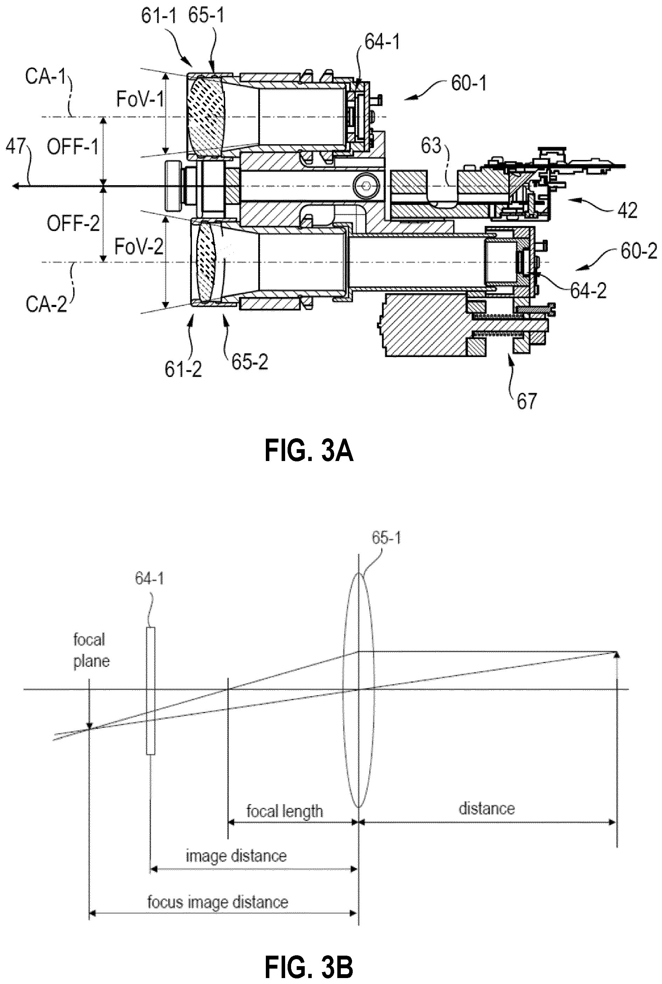

**FIGS. 3A****, B** shows the optical components of the measuring head 23 shown in FIG. 2A in an exemplary version. The measuring head 23 includes the distance measuring device 42, the camera device 48, and the light source 49.

The camera device 48 includes a first camera device **60-1** and a second camera device **60-2,** and the light source 49 includes a first light source **61-1** and a second light source **61-2.** The first and second camera devices 60-1, 60-2 can differ in the field of view (e.g. small or wide field of view) and/or in the wavelength range, for which the camera device is configured (e.g. infrared or visible).

The distance measuring device 42 emits the distance measuring beam 47 defining a third instrument axis **63,** also called "targeting axis". The first camera device 60-1 includes a first camera axis **CA-1,** a first image sensor **64-1** and a first optical lens **65-1,** where the image distance between the first image sensor 64-1 and the first optical lens 65-1 (called "first image distance") is fixed and the focal length of the first optical lens 65-1 (called "first focal length") is fixed. The second camera device 60-2 includes a second camera axis CA-2, a second image sensor **64-2** and a second optical lens **65-2,** where the image distance between the second image sensor 64-2 and the second optical lens 65-2 (called "second image distance") is adaptable and the focal length of the second optical lens 65-2 (called "second focal length") is fixed. The first camera device 60-1 has a first field of view **FoV-1** and the second camera device 60-2 has a second field of view **FoV-2.**

In the exemplary version, the first and second camera devices 60-1, 60-2 are formed as off-axis camera devices, where the camera axis is arranged in a parallel manner with a non-zero offset to the targeting axis 63; the non-zero offset is called "parallax-offset". The first camera axis CA-1 is arranged with a first parallax-offset **OFF-1** to the targeting axis 63, and the second camera axis CA-2 is arranged with a second parallax-offset **OFF-2** to the targeting axis 63.

Instead of two off-axis camera devices, one of the first and second camera devices 60-1, 60-2 can be formed as on-axis camera device, where the camera axis and the targeting axis 63 are arranged with zero offset, and another one of the first and second camera devices 60-1, 60-2 can be formed as off-axis camera device, or the first and second camera devices 60-1, 60-2 can both be formed as on-axis camera device. The method for calibrating a camera device having an adaptable image distance and/or focal length according to the present invention can be used to calibrate off-axis camera devices and on-axis camera devices.

In the exemplary version of FIG. 3A, the image distance of the first camera device 60-1 (also called "first image distance") is fixed and the image distance of the second camera device 60-2 (also called "second image distance") is adaptable by a focus drive **67** that is motorized and configured to move the second image sensor 64-2 within a range between a minimum image distance and a maximum image distance. The setting of the first camera device 60-1 may be infinite, so that the focus image distance equals the first focal length. Alternatively, the image distance of the first camera device 60-1 may be adaptable within a range between a minimum image distance and a maximum image distance, and/or the second image sensor may be fixed, and the second optical lens may be configured to be moved by a motorized focus drive.

Typical image sensors for cameras devices used for total stations are monochrome or RGB-Bayer-filter CMOS sensors with small pixels and global shutter. To enable smooth tracking even with fast moving retro-reflective targets, the field of view should not be too small. A wider field of view is better for finding, re-finding, and tracking at short distances, but could be problematic for resolution.

FIG. 3B shows the first image sensor 64-1 and the first optical lens 65-1, which have a distance between each other that is called "first image distance". The term "first image distance" is used for the image distance between the first image sensor 64-1 and the first optical lens 65-1 of the first camera device 60-1. The term "focus image distance" is used for the image distance to the focal plane of the first optical lens 65-1.

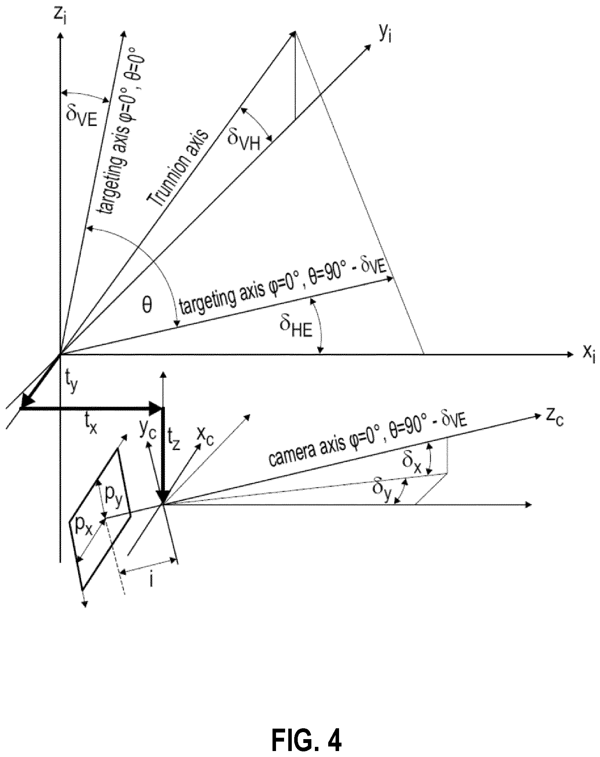

**FIG. 4** shows schematically the coordinate frames of the total station 10 and a camera device having a fixed image distance and/or focal length. The model of the camera device that is used for calibrating describes the mathematical relationship between the coordinates of a point in the 3D coordinate frame of the total station 10 and its projection onto an image plane of the first camera device 60-1. The first camera device 60-1 is the camera device having a fixed image distance and a fixed focal length.

The total station 10 includes the three instrument axes 31, 32, 63, which are called "vertical standing axis" (first instrument axis 31), "horizontal tilting axis" (second instrument axis 32) and "targeting axis" (third instrument axis 63). Due to instrument errors, the instrument axes 31, 32, 63 usually deviate from an ideal coordinate frame of the total station 10, which is defined by three coordinate axes **xᵢ, yᵢ, zᵢ,** which are perpendicular to each other. The instrument errors include axes angles errors, such as a vertical collimation axis error δ_{VE}, a horizontal collimation axis error δ_{HE}, and a trunnion axis error δ_{VH}, and axes eccentricities between the instrument axes.

The coordinate frame of the first camera device 60-1 is defined by three camera axes **x_{c}, y_{c}, z_{c}**, which are called "first camera axis" x_{c}, "second camera axis" y_{c}, and "third camera axis" z_{c}. The origin of the camera's coordinate frame is shifted to the origin of the total station 10 by **tₓ, t_{y}, t_{z}**, which are called "first camera translation" tₓ, "second camera translation" t_{y}, and "third camera translation" t_{z}. The camera axes x_{c}, y_{c}, z_{c} can have camera angle errors, where the first camera axis x_{c} can have a first camera angle error δₓ, also called pitch, the second camera axis y_{c} can have a second camera angle error δ_{y}, also called yaw, and the third camera axis z_{c} can have a third camera angle error, also called roll (not shown in FIG. 4).

The image plane of the first camera device 60-1 originates at its principal point **pₓ, p_{y}** and its x-axis and y-axis define the image plane. The principal point is shifted to the origin of the camera's coordinate frame by the image distance.

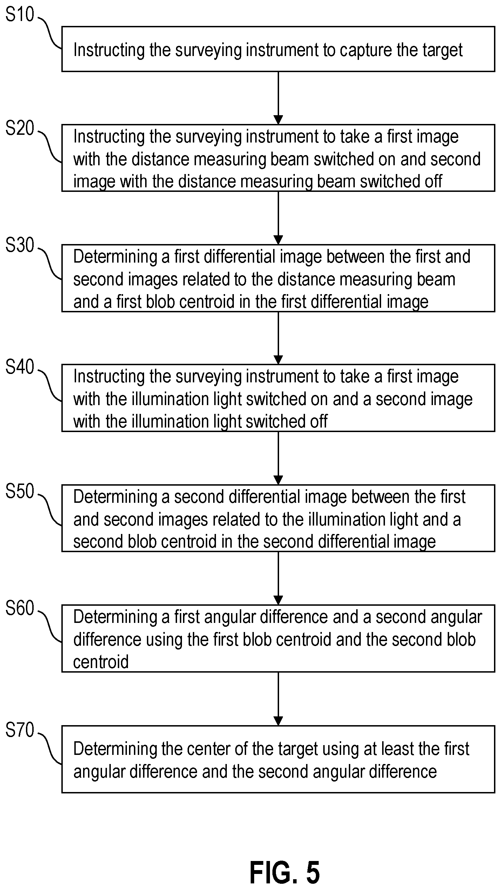

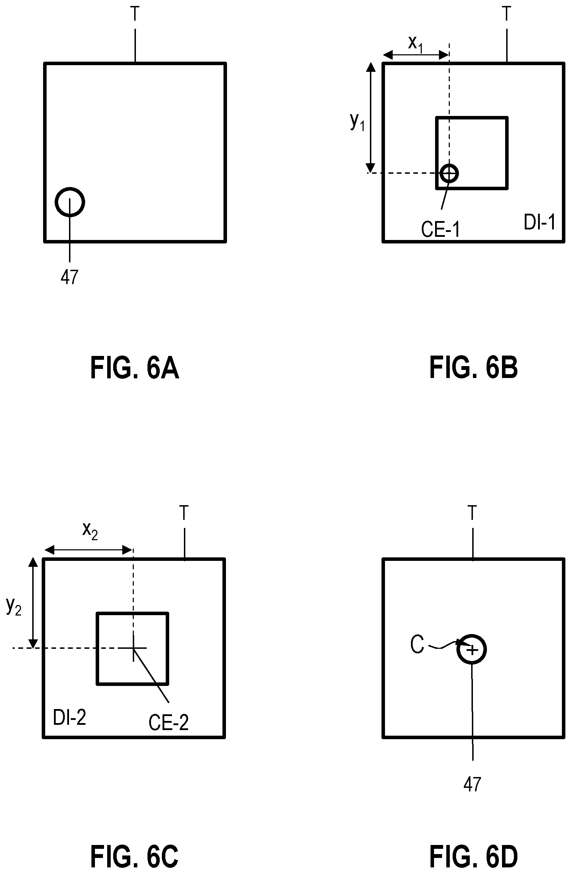

**FIG. 5** shows a method for determining the center of a target according to the present invention in a flow chart, and **FIGS. 6A-D** show schematically how a center **C** of a target **T** can be determined by a first differential image **DI-1** and a second differential image **DI-2.**

The method is performed by computer system 51, 53, 54, the target T, and the total station 10 and its components, such as the distance measuring device 42, the first camera device 60-1, and the first light source 61-1. The retro-reflective target T can be any retro-reflective target, for example those shown in FIG. 1.

The method for determining the center C of the target T comprises the following steps:
▪ Instructing the total station 10 to capture the target T (step **S10),**
▪ Instructing the total station 10 to take a first image of the target T with the distance measuring beam 47 switched on and a second image of the target T with the distance measuring beam 47 switched off (step **S20),**
▪ Determining the first differential image DI-1 between the first and second images related to the distance measuring beam 47 and determining a first blob centroid in the first differential image DI-1 (step **S30),**
▪ Instructing the total station 10 to take a first image of the target T with the illumination light 50 switched on and a second image of the target T with the illumination light 50 switched off (step **S40),**
▪ Determining the second differential image DI-2 between the first and second images related to the illumination light 50 and determining a second blob centroid in the second differential image DI-2 (step **S50),**
▪ Determining a first angular difference and a second angular difference using the first centroid and second centroid (step **S60),** and
▪ Determining the center C of the target T using at least the first angular difference and second angular difference (step **S70).**

FIG. 6A shows the target T that is captured by the total station 10 (step S10). Any method for searching for a target by means of the total station 10 can be used. For instance, the first camera device 60-1 or second camera device 60-2 can be used to capture the target T, or the target can be formed as an active target that is able to communicate with the total station 10 and can be found by the total station 10. Alternatively, the operator can be asked to arrange the distance measuring beam 47 anywhere on the target T.

FIG. 6B shows the first differential image DI-1 between the first image taken with the distance measuring beam 47 switched on and the second image taken with the distance measuring beam 47 switched off. In the first differential image DI-1, a first blob and the first blob centroid **CE-1** are determined, the image coordinates of the first blob centroid CE-1 are defined by **x₁** and **y₁**.

FIG. 6C shows the second differential image DI-2 between the first image taken with the illumination light 50 switched on and the second image taken with the illumination light 50 switched off. In the second differential image DI-2, a second blob and the second blob centroid **CE-2** are determined, the image coordinates of the second blob CE-2 centroid are defined by **x₂** and **y₂**.

The blob is a region in the first image taken with light (distance measuring beam 47 or illumination light 50) switched on, in the second image taken with light (distance measuring beam 47 or illumination light 50) switched off and/or in the differential image between the first and second images that differs in properties, such as brightness and/or color, compared to surrounding regions, and the blob centroid is a weighted average of the blob that can be weighted with the area of the blob as the weighting factor, wherein the weighting factor may be equal over the area of the blob, or it may be different.

From the first blob centroid (x₁, y₁) and the second blob centroid (x₂, y₂), a first angular difference and a second angular difference can be calculated from the differences (x₂ - x₁) respectively (y₂ - y₁). FIG. 6D shows the distance measuring beam 47 that is moved by the drive system to the center C of the target T.

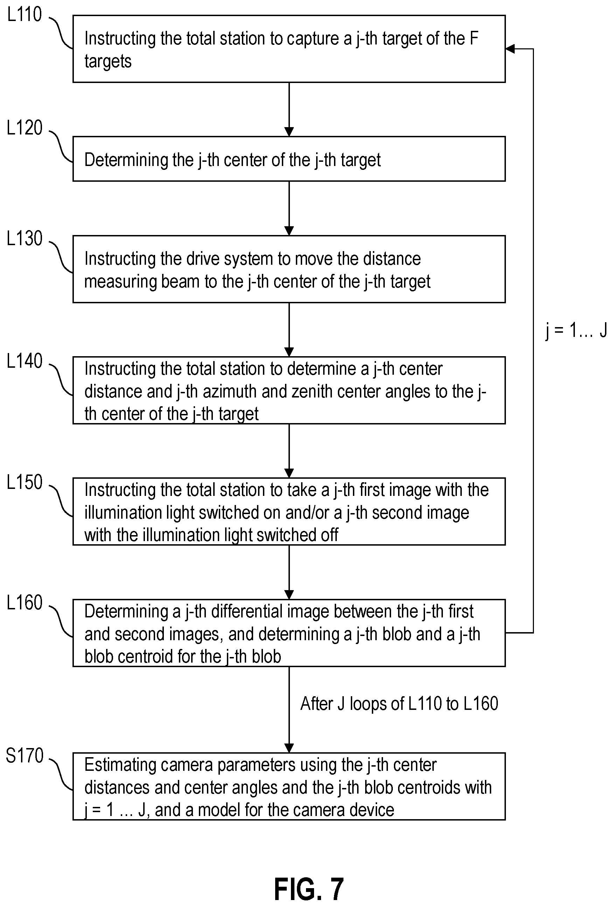

FIG. 7 shows a first method for calibrating a camera device according to the present invention in a flow chart. The camera device to be calibrated is a camera device with a fixed image distance and fixed focal length, such as the first camera device 60-1 of the total station 10.

The calibration is performed by computer system 51, 53, 54 using one or more retro-reflective targets, the first camera device 60-1, and the total station 10 and its components, such as the distance measuring device 42, the first and second angle encoders 43, 45, the drive system 44, 46 and the first light source 61-1. The retro-reflective targets can be any retro-reflective targets, for example those shown in FIG. 1.

The method for calibrating the camera device comprises the following steps:
▪ Performing a j-th loop with j = 1 ... J, J ≥ 1 and F ≥ J, the j-th loop comprising:
   - Instructing the total station 10 to capture a j-th target of the F targets (step **L110),**
   - Determining a j-th center of the j-th target using the method for determining the center of a target shown in FIG. 5 (step **L120),**
   - Instructing the drive system 44, 46 to move the distance measuring beam 47 to the j-th center of the j-th target (step **L130),**
   - Instructing the total station 10 to determine a j-th center distance to the j-th center of the j-th target using the distance measuring device 42 and j-th azimuth and zenith center angles using the first and second angle encoder 43, 45 (step **L140),**
   - Instructing the total station 10 to take a j-th first image of the j-th target with the illumination light 50 switched on and a j-th second image of the j-th target with the illumination light 50 switched off (step **L150),**
   - Determining a j-th differential image between the j-th first image and j-th second image, and determining a j-th blob and a j-th blob centroid for the j-th blob (step **L160),**
▪ Estimating one or more camera parameters using the correspondences of the j-th center distance and center angles and the j-th blob centroid with j = 1 ... J, and a model for the camera device 60-1 (step **S170).**

According to the calibration in FIG. 7, one or more retro-reflective targets are captured one after the other, and for each target, the steps L110 to L160 are performed. Step L140 can vary depending on the number of targets and/or the type of the camera device (off-axis or on-axis camera device). For two or more targets, it is necessary to determine the center distance, the azimuth center angle and the zenith center angle to the center of each target.

The first camera device 60-1 is an off-axis camera device and the position of the center of the target depends on the distance between the total station 10 and the target. Therefore, at least the center distance to the center of the target is mandatory for calibration. If the laser beam spot is not located in the center of the target while taking the first image and/or the second image of the target, the 3D point of the center of the target in the instrument coordinate frame must be determined by using the center distance, the azimuth center angle and the zenith center angle.

For an on-axis camera device, where the off-set between the camera axis and the targeting axis is zero and the position of the center of the target is independent from the distance between the total station 10 and the target, it is not necessary to determine the center distance, if the laser beam spot is located in the center of the target while taking the first image (illumination on) and/or the second image (illumination off) of the target with the camera device 60-1.

The term "j-th center" is used for the center of the j-th target, where the j-th center is determined by the method for determining the center of a target shown in FIG. 5, and the term "j-th blob centroid" is used for the blob centroid of the j-th target, where the j-th blob centroid can be determined in the j-th first image taken with illumination light 50 switched on, in the j-th second image taken with illumination light 50 switched off and/or in the j-th differential image between the j-th first and second images.

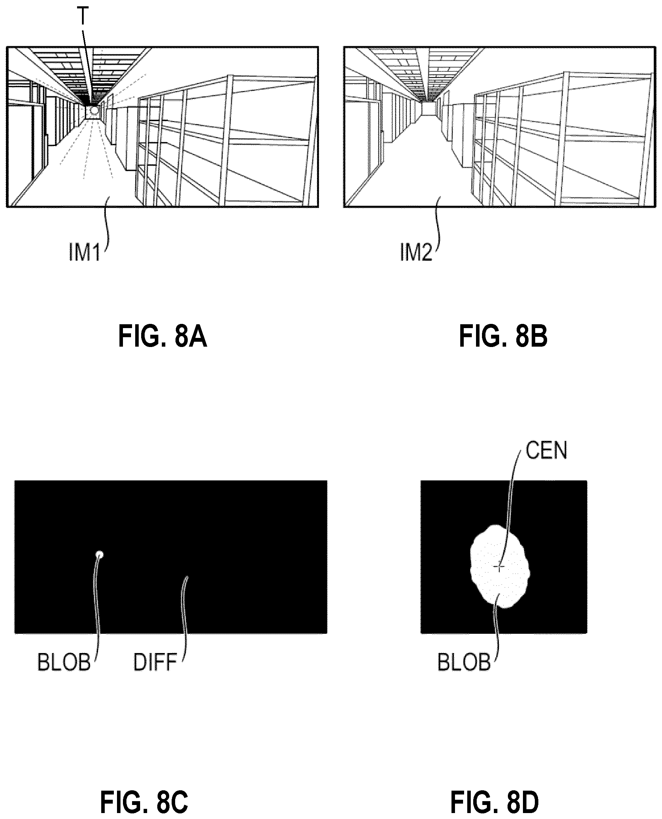

**FIGS. 8A-D** show a first image **IM1** of a target **T** taken by the camera device 60-1 with the illumination light 50 switched on (FIG. 8A), a second image **IM2** of the target T taken by the camera device 60-1 with the illumination light 50 switched off (FIG. 8B), a differential image **DIFF** between the first image IM1 and second image IM2 showing a blob **BLOB** (FIG. 8C), and a blob centroid **CEN** for the blob BLOB (FIG. 8D).

FIG. 8D shows blob detection for the differential image DIFF between the first and second images IM1, IM2. Alternatively, blob detection can be performed for the first image IM1 taken with the illumination light 50 switched on and/or for the second image IM2 taken with the illumination light 50 switched off.

Depending on the type of the retro-reflective target (prism/corner cube, cat-eye or foil) and/or the lighting conditions, the first image, the second image and/or the differential image is used for blob detection. For instance, the differential image between the first image (illumination on) and second image (illumination off) can be the first option for blob detection. However, in very bright lighting conditions, the first image and second image may be too similar to identify a blob in the differential image. In that case, either the first image of the target with the illumination light switched on or the second image of the target with the illumination light switched off can be used for blob detection.

The blob BLOB is a region in the first image IM1, in the second image IM2 and/or in the differential image DIFF that differs in properties, such as brightness and/or color, compared to surrounding regions, and the blob centroid CEN is a weighted average of the blob BLOB that can be weighted with the area of the blob BLOB as the weighting factor, wherein the weighting factor may be equal over the area of the blob, or it may be different.

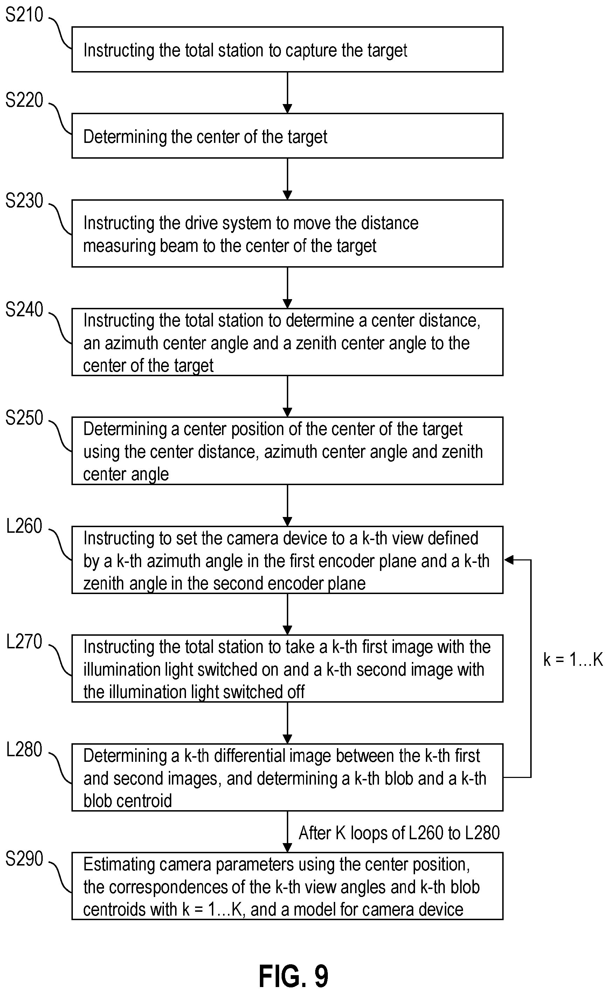

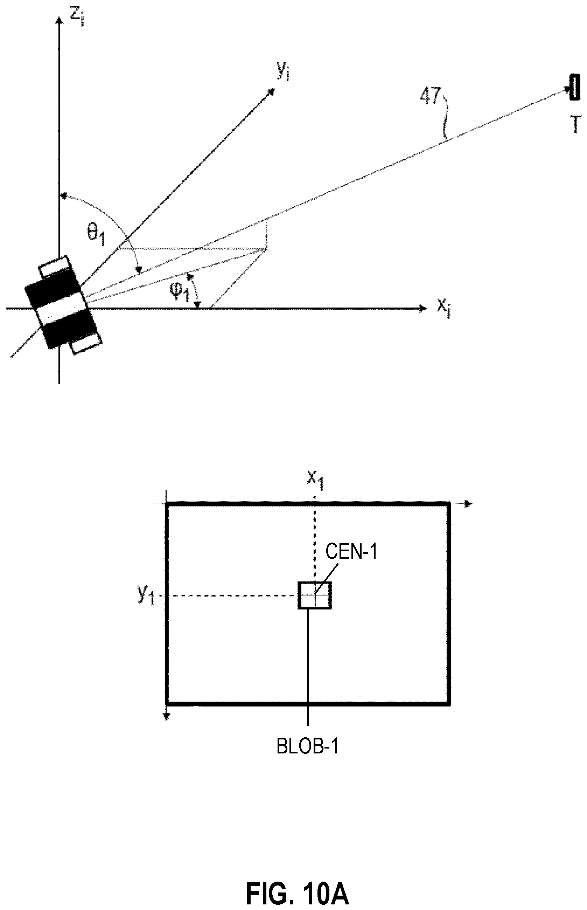

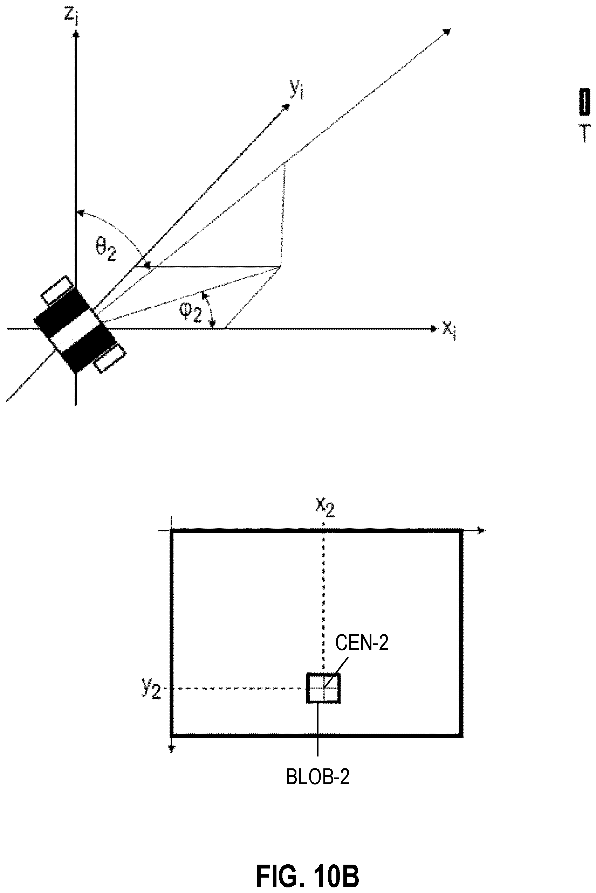

**FIG. 9** shows a second method for calibrating a camera device according to the present invention using two views of the camera device 60-1 for calibrating in a flow chart. **FIGS. 10A****, B** show schematically a retro-reflective target **T** and the camera device 60-1 arranged in a first view (FIG. 10A) and second view (FIG. 10B). The retro-reflective target T can be any retro-reflective target, for example those shown in FIG. 1.

The first view of the camera device 60-1 shown in FIG. 10A is defined by a first azimuth view angle φ₁ of the camera axis CA-1 in the first encoder plane 34 and a first zenith view angle θ₁ of the camera axis CA-1 in the second encoder plane 35, and the second view of the camera device 60-1 shown FIG. 10B is defined by a second azimuth view angle φ₂ of the camera axis CA-1 in the first encoder plane 34 and a second zenith view angle θ₂ of the camera axis CA-1 in the second encoder plane 35.

For each view, a first image of the target T is taken with the illumination light 50 switched on and a second image of the target T is taken with the illumination light 50 switched off. Blob detection is performed in the first image, in the second image or in a differential image between the first and second images.

In the first view shown in FIG. 10A, a first blob **BLOB-1** and a first blob centroid **CEN-1** are determined, where the first blob centroid CEN-1 is defined by **x₁, y₁,** and in the second view shown in FIG. 10B, a second blob **BLOB-2** and a second blob centroid **CEN-2** are determined, where the second blob centroid CEN-2 is defined by **x₂, y₂.**

The calibration is performed by computer system 51, 53, 54 using one retro-reflective target, the camera device 60-1, and the total station 10 and its components, such as the distance measuring device 42, the first and second angle encoders 43, 45, the drive system 44, 46 and the first light source 61-1.

The method for calibrating the camera device 60-1 comprises the following steps:
▪ Instructing the total station 10 to capture the target T (step **S210),**
▪ Determining a center of the target T using the method for determining a center of a target as shown in FIG. 5 (step **S220),**
▪ Instructing the drive system 44, 46 to move the distance measuring beam 47 to the center of the target T (step **S230),**
▪ Instructing the total station 10 to determine a center distance using the distance measuring device 42 and to determine an azimuth center angle and a zenith center angle to the center of the target T using the first angle encoder 43 and second angle encoder 45 (step **S240),**
▪ Determining a center position of the target T arranged in the center using the center distance, azimuth center angle and zenith center angle (step **S250),**
▪ Performing a k-th loop with k = 1 ... K, K ≥ 2, the k-th loop comprising:
   - Instructing to set the camera device 60-1 to a k-th view, wherein the k-th view is defined by a k-th azimuth view angle (φ₁, φ₂) in the first encoder plane 34 and a k-th zenith view angle (θ₁, θ₂) in the second encoder plane 35 (step **L260),**
   - Instructing the total station 10 to take a k-th first image of the target T with the illumination light 50 switched on and a k-th second image of the target T with the illumination light 50 switched off (step **L270),** and
   - Determining a k-th differential image between the k-th first image and kj-th second image, and determining in the k-th differential image, a k-th blob and a k-th blob centroid (step **L280),**
▪ Estimating one or more camera parameters using the center position of the target T, the correspondences of the k-th azimuth and zenith view angles and the k-th blob centroid with k = 1... K, and a model for the camera device 60-1 (step **S290).**

According to the calibration in FIG. 9, one retro-reflective target is captured (step S210), the center of the target is determined (step S220), the distance measuring beam 47 is oriented towards that center (step S230), and the center distance and the azimuth and zenith center angles are determined (step S240).

Step S240 can vary depending on the type of the camera device (off-axis or on-axis camera device). For an off-axis camera device, the center distance and the azimuth and zenith center angles to the center of the target T must be determined, when the camera device 60-1 is set to two or more different views, and for an on-axis camera device, the azimuth and zenith center angles to the center of the target must be determined and the center distance is optional. It is not mandatory to determine the full 3D center position of the target T (step S250); determination of the center position can be integrated into the model of the camera device.

According to the method shown in FIG. 9, the camera device 60-1 is set to the first view defined by the first azimuth and zenith view angles (φ₁, θ₁) (step L260 for k = 1) and the second view defined by second azimuth and zenith view angles (φ₂, θ₂) (step L260 for k = 2). For each of the two views, the total station 10 is instructed to take a first image with the illumination light 50 switched on and/or a second image with the illumination light 50 switched off (step L270). The blob centroid is determined in the first image, in the second image and/or in the differential image between the first and second images via blob detection (step L280).

The one or more camera parameters are estimated from the model of the camera device 60-1, the center position of the target T and the correspondences of the k-th azimuth and zenith view angles and the k-th blob centroids for k = 1... K. By using the first and second views of the camera device 60-1, it is possible to determine lens distortion parameters. Alternatively, from each correspondence of a 3D point in the coordinate frame of the total station 10 and the image point in the camera's image plane, two camera parameters can be estimated.

## Claims

1. A method for determining a center (C) of a target (12, CP-1, CP-2, CP-3, CP-4, CP-5, CP-6; T), that is retro-reflective, using a total station (10) including a base (21), a support (22) being rotatable with respect to the base (21) about a first instrument axis (31), a measuring head (23) being rotatable with respect to the support (22) about a second instrument axis (32), a drive system (44, 46) configured to rotate the support (22) about the first instrument axis (31) and/or the measuring head (23) about the second instrument axis (32), a first angle encoder (43) configured to determine an azimuth angle in a first encoder plane (34) with respect to a rotation of the support (22) about the first instrument axis (31), a second angle encoder (45) configured to determine a zenith angle in a second encoder plane (35) with respect to a rotation of the measuring head (23) about the second instrument axis (32), and a computer system (51, 53, 54) configured to control the total station and having control, evaluation and/or data processing functionality, wherein the measuring head (23) includes a distance measuring device (42) configured to emit a distance measuring beam (47) defining a third instrument axis (63), an illumination light source (49) configured to emit illumination light (50) and a camera device (60-1) including a camera axis (CA-1), an image sensor (64-1) and an optical lens (65-1), the method being performed by computer system (51, 53, 54) and comprising:
▪ Instructing the total station (10) to capture the target (T),
▪ Instructing the total station (10) to take a first image of the target (T) with the distance measuring beam (47) switched on and a second image of the target (T) with the distance measuring beam (47) switched off,
▪ Determining a first differential image (DI-1) between the first and second images related to the distance measuring beam (47) and determining a first blob centroid (CE-1) in the first differential image (DI-1),
▪ Instructing the total station (10) to take a first image of the target (T) with the illumination light (50) switched on and a second image of the target (T) with the illumination light (50) switched off,
▪ Determining a second differential image (DI-2) between the first and second images related to the illumination light (50) and determining a second blob centroid (CE-2) in the second differential image (DI-2),
▪ Determining a first angular difference and a second angular difference using the first blob centroid (CE-1) and second blob centroid (CE-2), and
▪ Determining the center (C) of the target (T) using at least the first angular difference and second angular difference.

2. The method of claim 1, wherein the center of the target (T) is determined by:
▪ Instructing the total station (10) to determine a first angle using the first angle encoder (43) and a second angle using the second angle encoder (45), and
▪ The center of the target is determined by using the first angle and first angular difference and by using the second angle and second angular difference.

3. The method of claim 1, wherein the center (C) of the target (T) is determined by instructing the drive system (44, 46) to move the distance measuring beam (47) about the first angular difference and second angular difference.

4. A computer program comprising instructions, which, when executed by a computer system (51, 53, 54), cause the computer system (51, 53, 54) to carry out the method for determining a center of a target according to any one of claims 1 to 3.

5. An apparatus comprising means for carrying out the method for determining a center of a target according to any one of claims 1 to 3.

6. A method for calibrating a camera device (60-1) of a total station (10) using at least one target (T) of F, F ≥ 1 targets (12, CP-1, CP-2, CP-3, CP-4, CP-5, CP-6; T), that are retro-reflective, and the total station (10) including a base (21), a support (22) being rotatable with respect to the base (21) about a first instrument axis (31), a measuring head (23) being rotatable with respect to the support (22) about a second instrument axis (32), a drive system (44, 46) configured to rotate the support (22) about the first instrument axis (31) and/or the measuring head (23) about the second instrument axis (32), a first angle encoder (43) configured to determine an azimuth angle in a first encoder plane (34) with respect to a rotation of the support (22) about the first instrument axis (31), a second angle encoder (45) configured to determine a zenith angle in a second encoder plane (35) with respect to a rotation of the measuring head (23) about the second instrument axis (32), and a computer system (51, 53, 54) configured to control the total station and having control, evaluation and/or data processing functionality, wherein the measuring head (23) includes a distance measuring device (42) configured to emit a distance measuring beam (47) defining a third instrument axis (63), an illumination light source (49) configured to emit illumination light (50), and the camera device (60-1) having a camera axis (CA-1), an image sensor (64-1) and an optical lens (65-1), the method being performed by the computer system (51, 53, 54) and comprising:
▪ Performing a j-th loop with j = 1 ... J, J ≥ 1 and F ≥ J, the j-th loop comprising:
- Instructing the total station (10) to capture a j-th target (T) of the F targets,
- Determining a j-th center of the j-th target using the method for determining a center of a target according to any one of claims 1 to 2,
- Instructing the drive system (44, 46) to move the distance measuring beam (47) to the j-th center of the j-th target,
- Instructing the total station (10) to take a j-th first image (IM1) of the j-th target with the illumination light (50) switched on and/or a j-th second image (IM2) of the j-th target with the illumination light (50) switched off,
- Determining in the j-th first image (IM1), in the j-th second image (IM2), and/or in a j-th differential image (DIFF) between the j-th first image (IM1) and j-th second image (IM2), a j-th blob (BLOB) and a j-th blob centroid (CEN) for the j-th blob (BLOB),
▪ Estimating at least one camera parameter of the camera device (60-1) using at least the j-th centroid with j = 1 ... J, and a model for the camera device (60-1).

7. The method of claim 6, wherein the total station (10) is instructed to determine a j-th center distance to the j-th center of the j-th target using the distance measuring device (42) and/or to determine a j-th azimuth center angle to the j-th center of the j-th target using the first angle encoder (43) and a j-th zenith center angle to the j-th center of the j-th target using the second angle encoder (45).

8. The method of any one of claims 6 to 7, wherein, for at least one j-th target of the F targets, the camera device (60-1) is set to at least two views one after the other, the at least two views are defined by different azimuth view angles (φ₁, φ₂) of the camera axis (CA-1) in the first encoder plane (34) and/or different zenith view angles (θ₁, θ₂) of the camera axis (CA-1) in the second encoder plane (35), and the first and second angle encoders (43, 45) are instructed to determine the azimuth view angles (φ₁, φ₂) respectively the zenith view angles (θ₁, θ₂) for the at least two views, wherein:
▪ For a first view of the at least two views:
- Instructing the total station (10) to take a first image of the j-th target with the illumination light (50) switched on and/or a second image of the j-th target with the illumination light (50) switched off,
- Determining in the first image, in the second image and/or in a first differential image between the first and second images a first blob (BLOB-1) and a first blob centroid (CEN-1) for the first blob (BLOB-1),
▪ For a second view of the at least two views:
- Instructing the total station (10) to take a first image of the j-th target with the illumination light (50) switched on and/or a second image of the j-th target with the illumination light (50) switched off,
- Determining in the first image, in the second image and/or in a second differential image between the first and second images a second blob (BLOB-2) and a second blob centroid (CEN-2) for the second blob (BLOB-2), and
▪ Estimating at least one camera parameter using at least the azimuth and zenith view angles of the first view and the first blob centroid, the azimuth and zenith view angles of the second view and the second blob centroid, and the model for the camera device (60-1).

9. The method of any one of claims 6 to 8, wherein at least two targets are captured by the total station (10) one after the other, wherein:
▪ For a first target of the at least two targets:
- Determining a first center of the first target,
- Instructing the total station (10) to arrange the distance measuring beam (47) at the first center of the first target,
- Instructing the total station (10) to determine at least a first center distance to the first center using the distance measuring device (42),
- Instructing the total station (10) to take a first image of the first target with the illumination light (50) switched on and/or a second image of the first target with the illumination light (50) switched off,
- Determining in the first image, in the second image and/or in a first differential image between the first and second images a first blob (BLOB-1) and a first blob centroid (CEN-1) for the first blob (BLOB-1),
▪ For a second target of the at least two targets:
- Determining a second center of the second target,
- Instructing the total station (10) to arrange the distance measuring beam (47) at the second center of the second target,
- Instructing the total station (10) to determine at least a second center distance to the second center using the distance measuring device (42),
- Instructing the total station (10) to take a first image of the second target with the illumination light (50) switched on and/or a second image of the second target with the illumination light (50) switched off,
- Determining in the first image, in the second image and/or in a second differential image between the first and second images a second blob (BLOB-2) and a second blob centroid (CEN-2) for the second blob (BLOB-2),
▪ Estimating at least one camera parameter using at least the first center distance and the first blob centroid, the second center distance and the second blob centroid, and the model for the camera device (60-1).

10. A computer program comprising instructions, which, when executed by a computer system (51, 53, 54), cause the computer system (51, 53, 54) to carry out the method for calibrating a camera device (60-1) according to any one of claims 6 to 9.

11. An apparatus comprising means for carrying out the method for calibrating a camera device (60-1) according to any one of claims 6 to 9.
